# EUROPEAN PATENT APPLICATION

(11) **EP 3 078 882 A1**
(43) Date of publication of application: **12.10.2016**
(21) Application number: 16164144.4
(22) Date of filing: 07.04.2016
(51) Int. Cl.: F16H 57/00, F16H 57/022, F16B 39/10, F16H 1/32

(54) **REDUCTION GEAR**

(30) Priority: 07.04.2015 JP 2015078637
(71) Applicant: Nabtesco Corporation, Tokyo (JP)
(72) Inventor: KOMORI, Hirofumi, Fuwa-gun, Gifu (JP); HAYASHI, Yusuke, Fuwa-gun, Gifu (JP)
(74) Representative: Grünecker Patent- und Rechtsanwälte PartG mbB

(57) **Abstract**

A reduction gear (1) includes: a case (10); an input shaft (20) and a speed reduction portion (30) both housed in the case (10); and an output shaft (100) having an one end connected with the speed reduction portion (30) and an other end protruding from the case (10). The speed reduction portion (30) includes a fixing member (67) that is threadedly engaged with the output shaft (100) in a condition of being pressed up against a side of the speed reduction portion (30). The output shaft (100) includes a rotation restriction member (68) that restricts rotation of the fixing member (67) with respect to the output shaft (100).

## Description

### BACKGROUND OF THE INVENTION

### Field of the Invention

The present invention relates to a reduction gear that includes a case having internal teeth formed on an inner peripheral side thereof and a gear having external teeth and disposed inside the case, the gear rotating through meshing of its external teeth with the internal teeth of the case.

### Background Art

An eccentric oscillation reduction gear is known as one type of such reduction gears. An eccentric oscillation reduction gear typically includes a case having internal teeth formed on an inner peripheral side thereof, a gear having external teeth in mesh with the internal teeth (hereinafter referred to as an external-tooth gear), a crank shaft that is disposed in a through hole formed in the external-tooth gear and that rotates to thereby oscillate the external-tooth gear, and a carrier that holds the external-tooth gear via the crank shaft. The crank shaft is rotatably held in the carrier and includes an eccentric body. The eccentric body is disposed in the through hole in the external-tooth gear. The foregoing arrangement results in the carrier holding the external-tooth gear via the crank shaft.

The carrier includes a first holding portion, a second holding portion, and a column. The first holding portion holds a first end portion of the crank shaft rotatably. The second holding portion holds a second end portion of the crank shaft rotatably. The column connects the first holding portion and the second holding portion in an axial direction. The external-tooth gear described above is disposed between the first holding portion and the second holding portion. The external-tooth gear has another through hole through which the column is passed, in addition to the through hole in which the eccentric body of the crank shaft is disposed.

In such a reduction gear, rotation of the crank shaft about a central axis thereof by an external input causes the eccentric body to oscillate the external-tooth gear, so that the external-tooth gear rotates through meshing between the external teeth of the external-tooth gear and the internal teeth of the case. As a result, the crank shaft rotates about its own axis, while orbitally revolving, and this orbital motion causes the carrier to rotate (see, for example, Patent Document 1).

### Prior Art Document

### Patent Document

Patent Document 1: JP-A-2014-211204

### SUMMARY OF THE INVENTION

Such a reduction gear includes a pair of output shaft bearings that rotatably support an output shaft. Each of the output shaft bearings is mounted on the output shaft between the carrier and a pinion. Each of the output shaft bearings is axially clamped and held between a nut and the case, the nut being disposed below the carrier, that is, on the side closer in the axial direction to the pinion than to the carrier. This results in the output shaft bearings being preloaded. In the known reduction gear, however, should the nut that fastens the carrier to the output shaft be loose, the shaft may come off position.

The present invention has been made in view of the foregoing situation of the known art and it is an object of the present invention to provide a reduction gear capable of preventing a nut from being loosened.

### Means for Solving the Problem

The present invention provides a reduction gear (1) that includes: a case (10); an input shaft (20) and a speed reduction portion (30) both housed in the case (10); an output shaft (100) having an one end connected with the speed reduction portion (30) and an other end protruding from the case (10). The speed reduction portion (30) includes a fixing member (67) that is threadedly engaged with the output shaft (100) in a condition of being pressed up against a side of the speed reduction portion (30). The output shaft (100) includes a rotation restriction member (68, 90) that restricts rotation of the fixing member (67) with respect to the output shaft (100).

In the reduction gear (1), preferably, the rotation restriction member (68) is a retaining ring fitted on the output shaft.

In the reduction gear (1), preferably, the retaining ring (68) has a C-shape in a plan view.

In the reduction gear (1), preferably, the fixing member (67) has a chamfered portion (67a), and the rotation restriction member (90) may be a jig that abuts on the chamfered portion (67a) to restrict rotation of the fixing member (67).

In the reduction gear (1), preferably, the jig (90) may include a fixing portion (91) fixed to the output shaft (100) and an abutment portion (92) that extends from the fixing portion (91) and abuts on the chamfered portion (67a).

### Effect of the Invention

In one aspect of the present invention, the output shaft can be prevented from falling off from the case through prevention of looseness in the fixing member from progressing.

### BRIEF DESCRIPTION OF THE DRAWINGS

Fig. 1 is a cross-sectional view showing a reduction gear according to an embodiment of the present invention.
Fig. 2 is a partial enlarged cross-sectional view showing part II of the reduction gear according to the embodiment of the present invention shown in Fig. 1.
Fig. 3 is a partial enlarged cross-sectional view showing a reduction gear according to a modification.

### DETAILED DESCRIPTION OF THE INVENTION

The following describes an embodiment of the present invention with reference to the accompanying drawings.

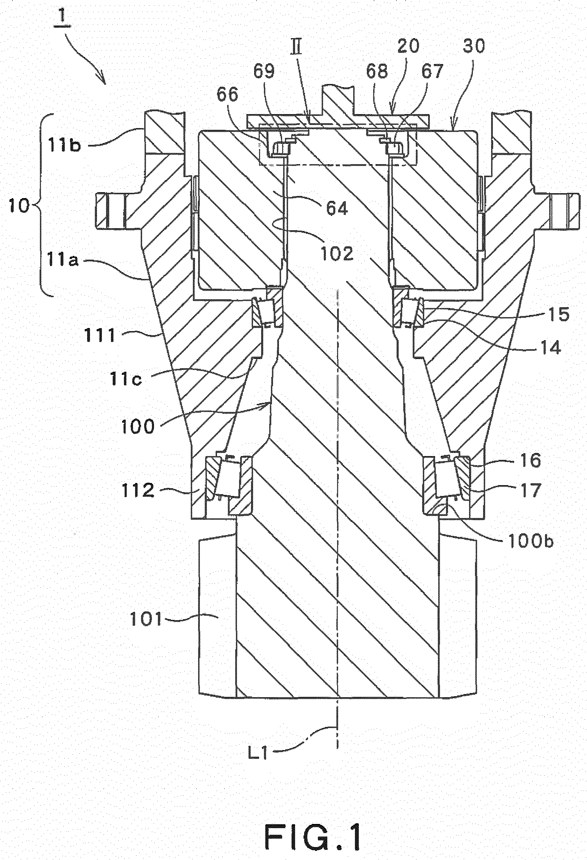

A reduction gear 1 according to the present embodiment shown in Fig. 1 is an eccentric oscillation reduction gear. The reduction gear 1 is suitably applied, for example, to a reduction gear incorporated in a yaw driving apparatus that provides yaw drive for rotating a nacelle with respect to a windmill tower or a pitch driving apparatus that provides pitch drive for rotating a blade shaft with respect to a hub on the nacelle side. It should be noted that the reduction gear 1 may also be used in various types of industrial machines and construction machines, in addition to the windmill.

Reference is made to Fig. 1. The reduction gear 1 in the present embodiment includes a case 10, an input gear (input shaft) 20, a speed reduction portion 30, and an output shaft 100. Specifically, the case 10 is formed into a cylinder. The input gear 20 and the speed reduction portion 30 are housed in the case 10. The output shaft 100 has an one end connected to the speed reduction portion 30 and an other end protruding from the case 10.

In the reduction gear 1, the speed reduction portion 30 reduces a speed of rotation applied via the input gear 20 from a motor (not shown) to a slower rotational speed to be output from the output shaft 100. A drive gear 101 is disposed on the other end of the output shaft 100 protruding from the case 10. The rotation applied from the input gear 20 is transmitted with a reduced speed to a driven gear (not shown) that meshes with the drive gear 101.

In Fig. 1, reference character L1 denotes a central axis of the output shaft 100. The output shaft 100 rotates about the central axis L1. In the following, an "axial direction," when simply so referred to, refers to a direction in which the central axis L1 extends or extending in parallel with the central axis L1. A direction perpendicular to the central axis L1 will be referred to as a radial direction and a direction about the central axis L1 will be referred to as a circumferential direction.

The case 10 includes a main case portion 11a and a sub-case portion 11b. The main case portion 11a is formed into a cylinder having both ends open. The sub-case portion 11b is mounted on an open portion on an one end side of the main case portion 11a. The main case portion 11a and the sub-case portion 11b are connected to each other through fastening of edge portions thereof with bolts (not shown). The output shaft 100 protrudes from an other end of the main case portion 11a. The other end of the main case portion 11a is opposite to the one end thereof on which the sub-case portion 11b is mounted. An annular wall portion 11c is formed on an inner peripheral surface of an intermediate portion between the one end and the other end of the main case portion 11a. The annular wall portion 11c bulges toward an inside in the radial direction.

The main case portion 11a includes an input side portion 111 and an output side portion 112. The input side portion 111 is disposed on the one end side with reference to the annular wall portion 11c, specifically, the side adjacent to the sub-case portion 11b. The output side portion 112 is disposed on the other end side with reference to the annular wall portion 11c, specifically, the side from which the output shaft 100 protrudes. The input side portion 111 houses therein the speed reduction portion 30. It should be noted that the speed reduction portion 30 is required only to include a mechanism that outputs a rotational force applied from the input gear 20 with a reduced speed to the output shaft 100. A well-known unit, for example, may be used for the speed reduction portion 30 and detailed description therefor is omitted.

The annular wall portion 11c of the main case portion 11a has an annular first bearing housing groove 14 formed therein. The first bearing housing groove 14 is recessed from the input side portion 111 side toward the output side portion 112 side. A first bearing 15 is inserted in the first bearing housing groove 14. The first bearing 15 illustrated in Fig. 1 is a tapered roller bearing. The first bearing 15 has an outer ring in abutment with or being brought close to a bottom surface of the first bearing housing groove 14 in the axial direction and has the outer ring in abutment with or being brought close to a side surface of the first bearing housing groove 14 in the radial direction. The first bearing 15 is thereby mounted in the first bearing housing groove 14.

Additionally, the annular wall portion 11c has an annular second bearing housing groove 16 formed therein at the other end (outer side end) on the output side portion 112. The second bearing housing groove 16 is recessed from the output side portion 112 side toward the input side portion 111 side. A second bearing 17 is inserted in the second bearing housing groove 16. The second bearing 17 illustrated in Fig. 1 is a tapered roller bearing. The second bearing 17 has an outer ring in abutment with or being brought close to a bottom surface of the second bearing housing groove 16 in the axial direction and has the outer ring in abutment with or being brought close to a side surface of the second bearing housing groove 16 in the radial direction. The second bearing 17 is thereby mounted in the second bearing housing groove 16.

The output shaft 100 is disposed on an inner peripheral side of an inner ring of the first bearing 15 and on an inner peripheral side of an inner ring of the second bearing 17. The output shaft 100 is thereby rotatably held in the case 10. The output shaft 100 protrudes from the first bearing 15 toward the input side portion 111 of the main case portion 11a. The output shaft 100 is connected to the speed reduction portion 30 at a portion thereof protruding toward the input side portion 111. The output shaft 100 has a spline portion 102 formed on an outer peripheral surface of the portion thereof protruding toward the input side portion 111. In this case, the speed reduction portion 30 fits into the spline portion 102 to achieve the connection between the output shaft 100 and the speed reduction portion 30.

The above-described input gear 20 is disposed inside the sub-case portion 11b of the case 10. A motor (not shown) is mounted on the sub-case portion 11b. Rotation of this motor is transmitted to the input gear 20. The input gear 20 is a spur gear. The input gear 20 is disposed such that a central axis thereof is disposed on the central axis L1 of the output shaft 100. The input gear 20 meshes with, for example, a spur gear (not shown) of the speed reduction portion 30 to thereby transmit rotation thereof to the speed reduction portion 30 side.

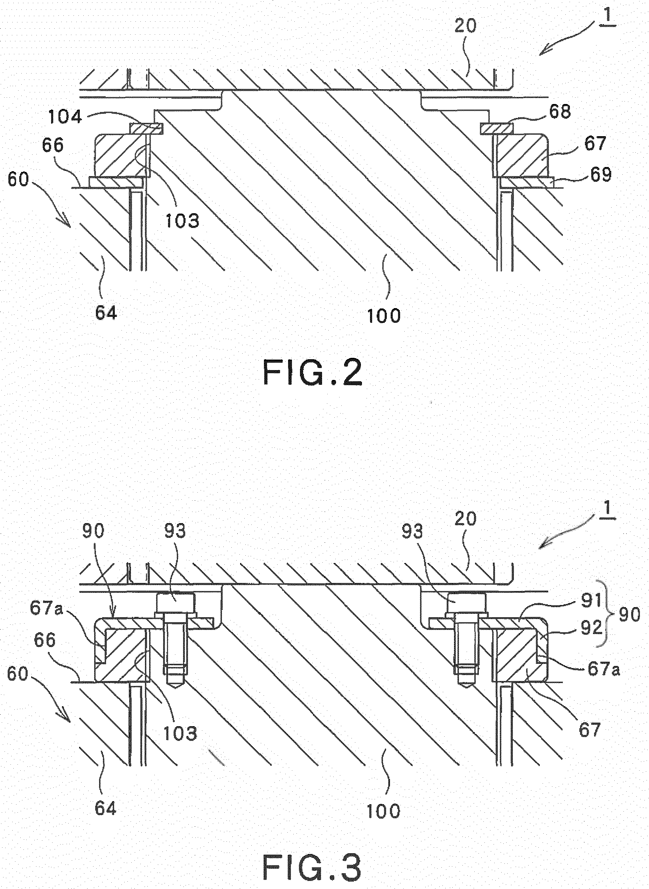

Reference is made to Figs. 1 and 2. The speed reduction portion 30 includes a fixing nut (fixing member) 67 that, in a condition of being pressed up against the speed reduction portion 30 side, threadedly engages the output shaft 100. In addition, the speed reduction portion 30 has an annular nut counterbored portion 66 formed in an inner peripheral portion of a surface thereof (upper surface in Fig. 1) on the sub-case portion 11b side. The nut counterbored portion 66 is recessed toward a side toward which the output shaft 100 protrudes (lower side in Fig. 1). Additionally, the speed reduction portion 30 includes a connection cylinder 64 through which the output shaft 100 is passed and that is connected to the output shaft 100. The output shaft 100 inserted in the connection cylinder 64 has a distal end protruding from the connection cylinder 64 and disposed on an inner peripheral side of the nut counterbored portion 66. The portion of the output shaft 100 disposed inside the nut counterbored portion 66 has external threads 103 (see Fig. 2) formed therein for threaded engagement with the fixing nut 67. The fixing nut 67 has a ring shape in a plan view and housed in the nut counterbored portion 66. Additionally, a washer 69 may be inserted between the fixing nut 67 and the nut counterbored portion 66.

An inner peripheral portion of a surface of the speed reduction portion 30 (lower surface in Fig. 1) on the side from which the output shaft 100 protrudes abuts on an inner ring of the first bearing 15 in the axial direction. As a result, tightening the fixing nut 67 onto the speed reduction portion 30 side causes the speed reduction portion 30 to be positioned in the axial direction. Specifically, tightening the fixing nut 67 onto the output shaft 100 preloads the first bearing 15 and the second bearing 17. The term "preloading" refers to pressure applied to a pair of bearings when the bearings are assembled together so as to be pressed against each other. More specifically, tightening the fixing nut 67 onto the output shaft 100 causes the speed reduction portion 30, the first bearing 15, and the second bearing 17 to be clamped between the fixing nut 67 and an output shaft side support surface 100b of the output shaft 100. As such, tightening the fixing nut 67 onto the output shaft 100 causes the preload to act on the first bearing 15 and the second bearing 17.

In the present embodiment, the output shaft 100 is provided with a rotation restriction member 68. The rotation restriction member 68 restricts rotation of the fixing nut 67 with respect to the output shaft 100. In this case, the rotation restriction member 68 includes a retaining ring fitted on the output shaft 100. The rotation restriction member 68 substantially has a C-shape in a plan view. Specifically, the output shaft 100 has a fitting groove 104 formed at a portion thereof protruding from the connection cylinder 64 toward the input gear 20 side (upper side in Fig. 1). The fitting groove 104 extends throughout a circumferential direction. The rotation restriction member 68 including the retaining ring is housed in the fitting groove 104. The fitting groove 104 has a depth (radial distance) that is smaller than a width (radial distance) of the rotation restriction member 68. Thus, the rotation restriction member 68, when fitted in the fitting groove 104, protrudes from the fitting groove 104 in the radial direction to be in contact with an upper surface of the fixing nut 67. This arrangement enables the rotation restriction member 68 to prevent the fixing nut 67 from moving upward (moving toward the input gear 20 side). Thus, the rotation restriction member 68 prevents the fixing nut 67 from rotating to move in a direction in which the fixing nut 67 is loosened along the external threads 103 of the output shaft 100.

The following describes effects of the present embodiment.

In the reduction gear 1 described above, the motor not shown rotates the input gear 20. The rotation of the input gear 20 undergoes speed reduction by the speed reduction portion 30 and is transmitted from the speed reduction portion 30 to the output shaft 100. This transmission rotates the output shaft 100, so that torque can be transmitted from the drive gear 101.

In the reduction gear 1 according to the present embodiment, the speed reduction portion 30 includes the fixing nut 67 that, in a condition of being pressed up against the speed reduction portion 30 side, threadedly engages the output shaft 100. In addition, the rotation restriction member 68, that restricts rotation of the fixing nut 67 with respect to the output shaft 100, is provided on the output shaft 100. This arrangement prevents looseness occurring in the fixing nut 67 from progressing and prevents the output shaft 100 from falling off from the case 10.

Specifically, the output shaft 100 is inserted from the output side portion 112 side (lower side in Fig. 1) of the case 10 and held in the case 10. To this end, the output shaft 100 has a diameter gradually tapering off from the output side portion 112 side toward the input side portion 111 side (upper side in Fig. 1). The output shaft 100, while being inserted into the inner peripheries of the first bearing 15 and the second bearing 17, is not directly fixed to the first bearing 15 or the second bearing 17. Thus, when the fixing nut 67 is loose, the output shaft 100 can leave the first bearing 15 and the second bearing 17, falling off toward the output side portion 112 side (lower side in Fig. 1) of the case 10. In contrast, in the present embodiment, the rotation restriction member 68 prevents the fixing nut 67 from moving upward and rotating as described previously. This eliminates a likelihood that the fixing nut 67 will come off from the output shaft 100, so that the output shaft 100 can be prevented from falling off from the case 10.

In the present embodiment, the rotation restriction member 68 includes the retaining ring that substantially has a C-shape in a plan view and that is fitted on the output shaft 100. This configuration achieves a simple structure for restricting rotation of the fixing nut 67. The configuration can reduce manufacturing cost of the reduction gear 1 and prevent weight of the reduction gear 1 from inordinately increasing.

### Modification

The following describes, with reference to Fig. 3, a modification of the reduction gear according to the present embodiment. The modification shown in Fig. 3 includes a rotation restriction member that is configured differently from the rotation restriction member in the present embodiment. The modification shares substantially the same configurations as the configurations of the present embodiment shown in Figs. 1 and 2 in other respects. In Fig. 3, like or corresponding parts are identified by the same reference characters as those used for the present embodiment shown in Figs. 1 and 2 and descriptions for those parts will be omitted.

Reference is made to Fig. 3. A fixing nut 67 has a chamfered portion 67a formed on an outer periphery thereof. In this case, the chamfered portion 67a is provided in pair disposed at symmetrical positions across a central axis L1. The chamfered portions 67a each have a plane that extends in parallel with the paper surface of Fig. 3. The arrangement is, however, illustrative only and the chamfered portion 67a may be disposed at one place or at three or more places.

A rotation restriction member 90 includes a jig that abuts on the chamfered portion 67a and restricts rotation of the fixing nut 67. In this case, the rotation restriction member 90 corresponds in number with the chamfered portion 67a (two in Fig. 3). Each rotation restriction member 90 has a substantially L-shaped cross section. Each rotation restriction member 90 includes a horizontal fixing portion 91 and an abutment portion 92. Specifically, the fixing portion 91 is fixed to an output shaft 100. The abutment portion 92 extends perpendicularly from the fixing portion 91 and abuts on the chamfered portion 67a.

The output shaft 100 has threaded holes 105 formed in a surface thereof on the side of an input gear 20 (upper side in Fig. 3). Bolts (fastening members) 93 are to be inserted in the threaded holes 105. The rotation restriction members 90 are each fixed to the output shaft 100 by the bolt 93 that is threadedly engaged with the threaded hole 105.

As described above, the abutment portion 92 of the rotation restriction member 90 including the jig having a substantially L-shaped cross section abuts on the chamfered portion 67a of the fixing nut 67. This abutment prevents the fixing nut 67 from rotating to move in a direction in which the fixing nut 67 is loosened with respect to the output shaft 100. This eliminates the likelihood that the fixing nut 67 will come off from the output shaft 100, so that the output shaft 100 can be prevented from falling off from a case 10.

## Claims

1. A reduction gear (1), comprising:
a case (10);
an input shaft (20) and a speed reduction portion (30) both housed in the case (10);
an output shaft (100) having an one end connected with the speed reduction portion (30) and an other end protruding from the case (10),
wherein:
the speed reduction portion (30) includes a fixing member (67) that is threadedly engaged with the output shaft (100) in a condition of being pressed up against a side of the speed reduction portion (30); and
the output shaft (100) includes a rotation restriction member (68, 90) that restricts rotation of the fixing member (67) with respect to the output shaft (100).

2. The reduction gear (1) according to claim 1, wherein the rotation restriction member (68) is a retaining ring fitted on the output shaft.

3. The reduction gear (1) according to claim 2, wherein the retaining ring (68) has a C-shape in a plan view.

4. The reduction gear (1) according to claim 1, wherein:
the fixing member (67) has a chamfered portion (67a); and
the rotation restriction member (90) is a jig that abuts on the chamfered portion (67a) to restrict rotation of the fixing member (67).

5. The reduction gear (1) according to claim 1, wherein the jig (90) includes:
a fixing portion (91) fixed to the output shaft (100); and
an abutment portion (92) that extends from the fixing portion (91) and abuts on the chamfered portion (67a).
